# FASCICULE DE BREVET EUROPEEN

(11) **EP 3 060 062 B1**
(45) Date de publication et mention de la délivrance du brevet: **16.08.2017**
(21) Numéro de dépôt: 14805970.2
(22) Date de dépôt: 21.10.2014
(51) Int. Cl.: A23C 9/12

(54) **APPAREIL POUR LA RÉALISATION DE PRÉPARATIONS FERMENTÉES À BASE DE LAIT, NOTAMMENT DE PRÉPARATIONS LIQUIDES**
VORRICHTUNG ZUR HERSTELLUNG FERMENTIERTER ZUBEREITUNGEN AUF MILCHBASIS, INSBESONDERE FLÜSSIGE ZUBEREITUNGEN
APPARATUS FOR PRODUCING FERMENTED MILK-BASED PREPARATIONS, IN PARTICULAR LIQUID PREPARATIONS

(30) Priorité: 24.10.2013 FR 1360405
(43) Date de publication de la demande: 31.08.2016
(73) Titulaire: SEB S.A., 69130 Ecully (FR)
(72) Inventeur: BLOND, Laurent, F-21200 Beaune (FR); SICARD, Mariette, F-21260 Veronnes (FR); LARGUEZE, Mathieu, F-65000 Tarbes (FR); FERRER, Florent, F-74600 Seynod (FR)
(74) Mandataire: Bourrières, Patrice
(86) Numéro de dépôt international: PCT/FR2014/052675
(87) Numéro de publication internationale: WO 2015/059402

(56) Documents cités:
- EP-A1- 0 242 916
- EP-A1- 2 422 626
- FR-A1- 2 956 291
- US-A- 4 938 973

## Description

La présente invention concerne le domaine technique de la fabrication de préparations fermentées à base de lait.

La présente invention concerne plus particulièrement, mais non exclusivement, la fabrication de préparations fermentées à base de lait dans un appareil électrique domestique.

La présente invention concerne notamment, mais non exclusivement, la fabrication de préparations fermentées liquides à base de lait telles que les laits fermentés et les yaourts à boire.

Les préparations fermentées à base de lait telles que les yaourts, les yaourts liquides ou l'Ayran mettent en oeuvre des fermentations dans une plage de température comprise entre 40°C et 50°C, idéalement autour de 43°C à 45°C.

D'autres préparations fermentées liquides à base de lait mettent en oeuvre des fermentations dans une plage de température plus basse, par exemple comprise entre 20 et 30°C pour le Kefir ou le Leben.

Il est connu du document CN2643666U un appareil pour la réalisation de préparations fermentées à base de lait, comprenant un boîtier à double paroi présentant une ouverture supérieure, une cuve agencée dans le boîtier, un couvercle intérieur disposé sur la cuve, un couvercle extérieur disposé sur le boîtier. Un fil chauffant est bobiné autour de la paroi intérieure du boîtier. Le fil chauffant est recouvert par une membrane d'isolation. Un tel appareil présente une construction simple. Un inconvénient de la réalisation proposée dans ce document réside toutefois dans la difficulté d'obtenir un bobinage précis du fil chauffant. Il en résulte une inhomogénéité de chauffe d'un appareil à l'autre, ce qui rend plus difficile l'obtention de préparations fermentées de qualité similaire d'un appareil à l'autre.

Un objet de la présente invention est de proposer un appareil pour la réalisation de préparations fermentées à base de lait, qui présente une construction simple et une utilisation facile, et qui permette d'obtenir des préparations de qualité satisfaisante.

Un autre objet de la présente invention est de proposer un appareil pour la réalisation de préparations fermentées à base de lait, qui soit bien adapté à la réalisation de préparations fermentées mettant en oeuvre des fermentations intervenant dans une plage de température plus basse que la plage de température usuelle pour la réalisation de yaourt.

Un autre objet de la présente invention est de proposer un appareil pour la réalisation de préparations fermentées à base de lait, qui soit adapté à la réalisation de plusieurs types de préparations fermentées mettant en oeuvre des fermentations intervenant dans différentes plages de températures.

Un autre objet de la présente invention est de proposer un appareil pour la réalisation de préparations fermentées à base de lait, qui soit bien adapté pour un fonctionnement dans une gamme étendue de températures ambiantes.

Ces objets sont atteints avec un appareil pour la réalisation de préparations fermentées à base de lait, notamment de préparations fermentées liquides, comportant un boîtier principal définissant une cavité présentant une ouverture supérieure, une cuve amovible insérée au moins partiellement dans la cavité, un couvercle intérieur associé à la cuve, un couvercle principal associé au boîtier principal, le boîtier principal présentant une enveloppe externe et une paroi interne définissant une chambre intérieure logeant un dispositif de chauffe comprenant des moyens de chauffe latéraux, les moyens de chauffe latéraux comprenant au moins un fil chauffant latéral enroulé en spirale sur plusieurs tours autour de la paroi interne, du fait que la paroi interne présente au moins une série de conformations définissant des logements pour positionner le fil chauffant latéral. Cette disposition permet un positionnement précis du fil chauffant latéral, ce qui favorise l'obtention de conditions de chauffe comparables d'un appareil à l'autre.

Avantageusement alors, la paroi interne présente deux séries de conformations disposées de manière opposée. Cette disposition permet d'améliorer encore la régularité de l'enroulement du fil chauffant latéral.

Avantageusement encore, la ou chaque série de conformations appartient à un élément de montage rapporté à l'extérieur de la paroi interne. Cette disposition permet de faciliter la réalisation de la paroi interne.

Avantageusement encore, les moyens de chauffe latéraux comprennent une membrane de diffusion de chaleur agencée entre la paroi interne et le fil chauffant latéral. Cette disposition permet de limiter les niveaux de température de la paroi interne, ce qui favorise l'utilisation de matières plastiques peu onéreuses telles que le PP (Polypropylène). Cette disposition permet également de favoriser le chauffage de la cavité au détriment du chauffage de la chambre intérieure du boîtier principal.

Avantageusement alors, la membrane de diffusion de chaleur est agencée entre la paroi interne et le ou chaque élément de montage. Cette disposition facilite la mise en place de la membrane de diffusion de chaleur.

Avantageusement encore, les moyens de chauffe latéraux comprennent une autre membrane de diffusion de chaleur disposée autour de la membrane de diffusion de chaleur, le fil chauffant latéral étant disposé entre la membrane de diffusion de chaleur et l'autre membrane de diffusion de chaleur. Cette disposition contribue également au chauffage de la cavité au détriment du chauffage de la chambre intérieure du boîtier principal.

Avantageusement alors, l'autre membrane de diffusion de chaleur recouvre les conformations du ou des éléments de montage. Cette disposition facilite la mise en place de l'autre membrane de diffusion de chaleur.

Avantageusement encore, la cuve présente une partie supérieure évasée et le couvercle intérieur est engagé à l'intérieur de la partie supérieure évasée. Cette disposition permet de favoriser un bon confinement de l'enceinte contenant la préparation, pour éviter les déperditions de chaleur et obtenir une chauffe plus homogène.

Selon une forme de réalisation avantageuse, le dispositif de commande comporte un panneau de commande pour sélectionner un mode de chauffe parmi au moins deux modes de chauffe. Les modes de chauffe peuvent notamment différer par la température de régulation préprogrammée et/ou par la durée de chauffe préprogrammée.

Selon une construction avantageuse, le boîtier principal comporte un corps extérieur tubulaire reposant sur une base et portant un corps intérieur définissant la paroi interne. Cette disposition permet de simplifier la construction de l'appareil.

Avantageusement alors, le panneau de commande est porté par le corps extérieur tubulaire. Cette disposition permet de simplifier la construction de l'appareil.

Avantageusement encore, le dispositif de commande comporte un circuit de commande porté par la paroi interne. Cette disposition permet de simplifier la construction de l'appareil.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil selon l'invention,
- la figure 2 est une vue de dessus du boîtier principal de l'appareil illustré sur la figure 1,
- la figure 3 est une vue agrandie d'une partie de la figure 2,
- la figure 4 est une vue en élévation et en coupe de l'appareil illustré sur la figure 1,
- la figure 5 est une vue en perspective et en éclaté du boîtier principal de l'appareil illustré sur les figures 1 et 4,
- la figure 6 est une vue de dessous du boîtier principal de l'appareil illustré sur la figure 1, dans laquelle la base du boîtier principal a été retirée,
- la figure 7 est une vue de dessous de la paroi interne du boîtier principal de l'appareil illustré sur la figure 1, la base et l'enveloppe externe du boîtier principal ayant été retirées,
- la figure 8 est une vue en perspective de l'appareil illustré sur les figures 1 et 4,
- la figure 9 est une vue en perspective de l'appareil illustré sur les figures 1, 4 et 8, dans laquelle le couvercle principal a été retiré.

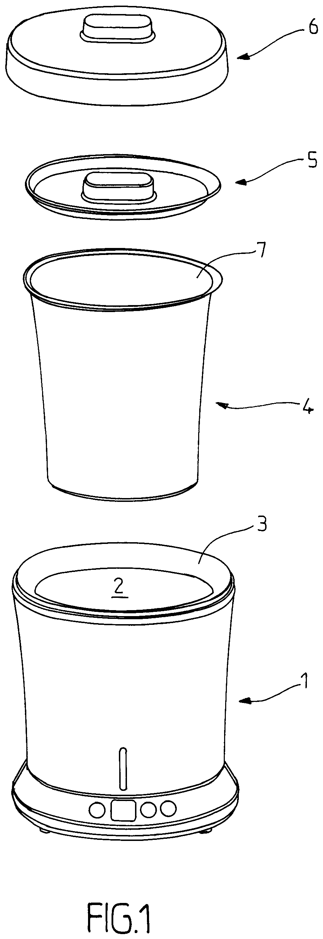

L'appareil pour la réalisation de préparations fermentées à base de lait, notamment de préparations fermentées liquides, illustré sur les figures 1 à 9 comporte un boîtier principal 1 définissant une cavité 2 présentant une ouverture supérieure 3, une cuve 4 amovible insérée au moins partiellement dans la cavité 2, un couvercle intérieur 5 associé à la cuve 4, et un couvercle principal 6 associé au boîtier principal 1. La cuve 4 présente avantageusement une géométrie allongée prévue pour le rangement dans la porte d'un réfrigérateur. La hauteur de la cuve 4 est de préférence supérieure à la plus grande largeur de la cuve 4. La cuve 4 présente par exemple une capacité utile d'environ 1,7 litre. La cuve 4 et le couvercle intérieur 5 forment une enceinte de préparation confinée pour contenir le lait et les ferments.

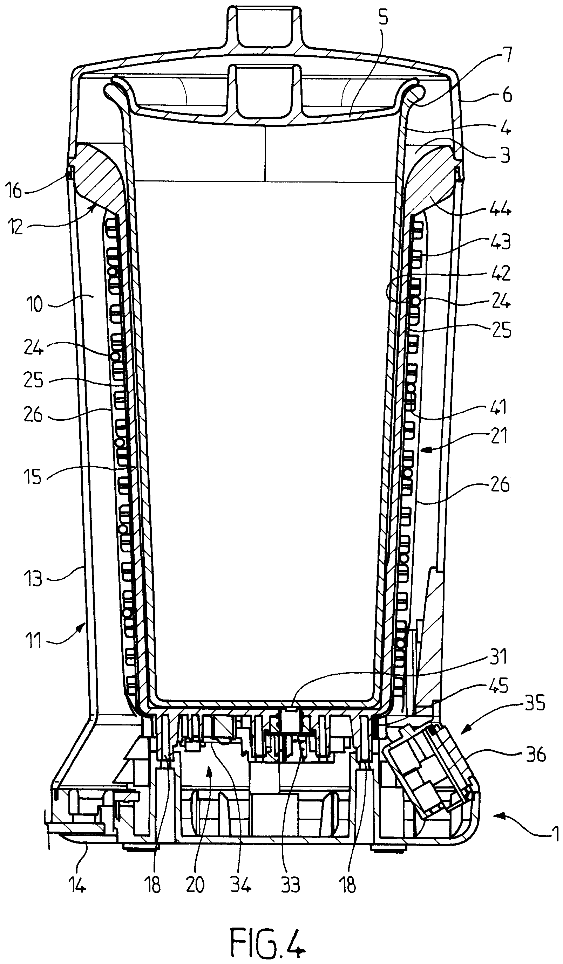

Plus particulièrement dans l'exemple de réalisation illustré sur les figures, la cuve 4 présente une partie supérieure évasée 7, tel que bien visible sur les figures 1, 4 et 9. Le couvercle intérieur 5 est engagé à l'intérieur de la partie supérieure évasée 7, tel que visible sur la figure 4. Le couvercle intérieur 5 ferme ainsi la cuve 4 de manière sensiblement étanche.

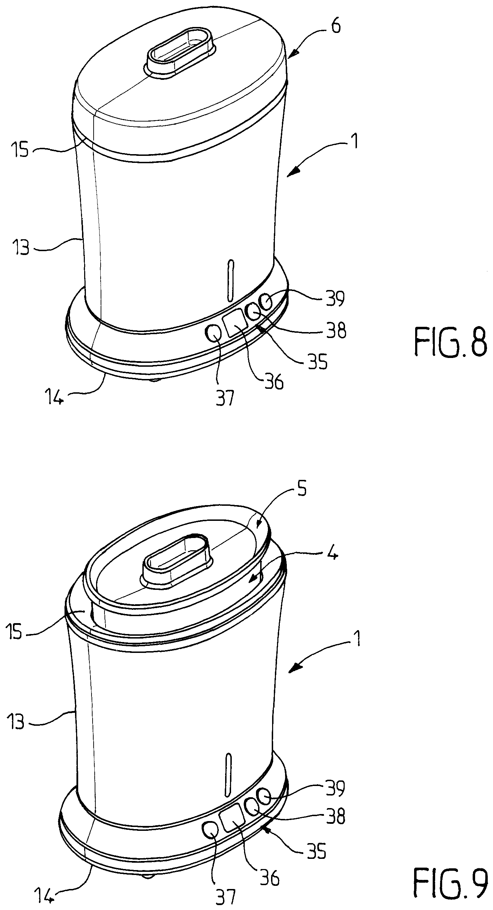

La cuve 4 en place dans la cavité 2 dépasse du boîtier principal 1, tel que visible sur la figure 9. Le couvercle principal 6 présente une bordure annulaire inférieure 8 entourant la partie supérieure de la cuve 4, tel que visible sur la figure 4.

Tel que mieux visible sur la figure 4, le boîtier principal 1 présente une enveloppe externe 11 et une paroi interne 12 définissant une chambre intérieure 10. Le boîtier principal 1 est ainsi un boîtier à double paroi. La chambre intérieure 10 s'étend autour et en dessous de la cavité 2. L'enveloppe externe 11 est fermée par le couvercle principal 6. La paroi interne 12 s'étend sous le couvercle principal 6 et forme la cavité 2.

Plus particulièrement dans l'exemple de réalisation illustré sur les figures, le boîtier principal 1 comporte un corps extérieur tubulaire 13 reposant sur une base 14. Le corps extérieur tubulaire 13 porte un corps intérieur 15. Le corps intérieur 15 repose sur une bordure supérieure 16 du corps extérieur tubulaire 13. Le couvercle principal 6 repose sur le corps intérieur 15 autour de la cavité 2. Le corps extérieur tubulaire 13, la base 14, et la partie périphérique du corps intérieur 15 définissent l'enveloppe externe 11. La partie centrale du corps intérieur 15 définit la paroi interne 12. La base 14 est assemblée avec le corps extérieur tubulaire 13 et avec le corps intérieur 15, par exemple au moyen de vis montées dans des logements de vis 17, 18 issus du corps extérieur tubulaire 13 ou du corps intérieur 15. Notamment les logements de vis 18 issus du corps intérieur 15 reposent sur des cheminées 19 issues de la base 14. La chambre intérieure 10 est ainsi traversée par plusieurs piliers formés par les logements de vis 18 et les cheminées 19.

Le corps intérieur 15, le corps extérieur tubulaire 13 et la base 14 sont avantageusement réalisés en matière plastique, notamment en thermoplastique. Le corps intérieur 15, le corps extérieur tubulaire 13 et la base 14 sont par exemple réalisés en polypropylène.

La cuve 4, le couvercle intérieur 5 et le couvercle externe 6 sont avantageusement réalisés en matière plastique, notamment en matière plastique transparente. La cuve 4 est par exemple réalisée en Tritan™, le couvercle intérieur 5 et le couvercle externe 6 étant par exemple réalisés en SAN.

Tel que mieux visible sur la figure 4, la chambre intérieure 10 loge un dispositif de chauffe 20. Le boîtier principal 1 à double paroi formant la chambre intérieure 10 définit avec le couvercle principal 6 une enceinte de chauffe confinée favorisant l'obtention d'une température homogène dans la cavité 2. Le dispositif de chauffe 20 comprend des moyens de chauffe latéraux 21 et des moyens de chauffe inférieurs 22.

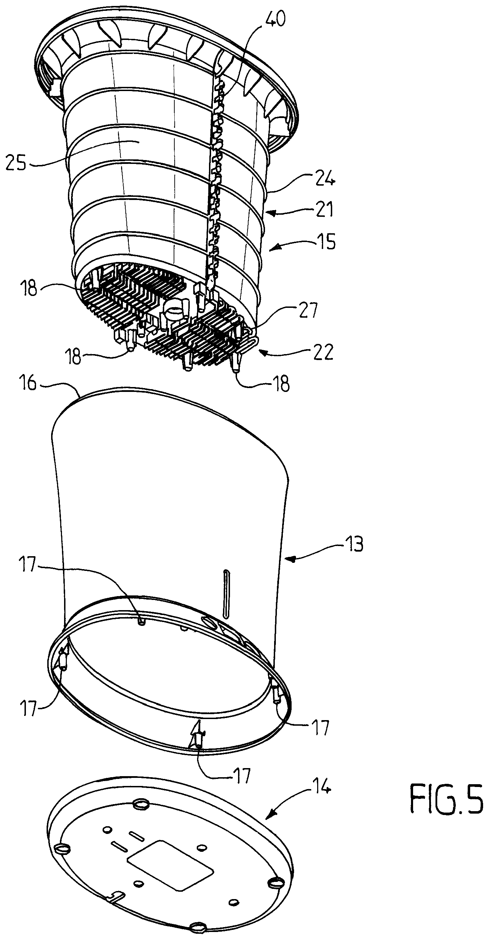

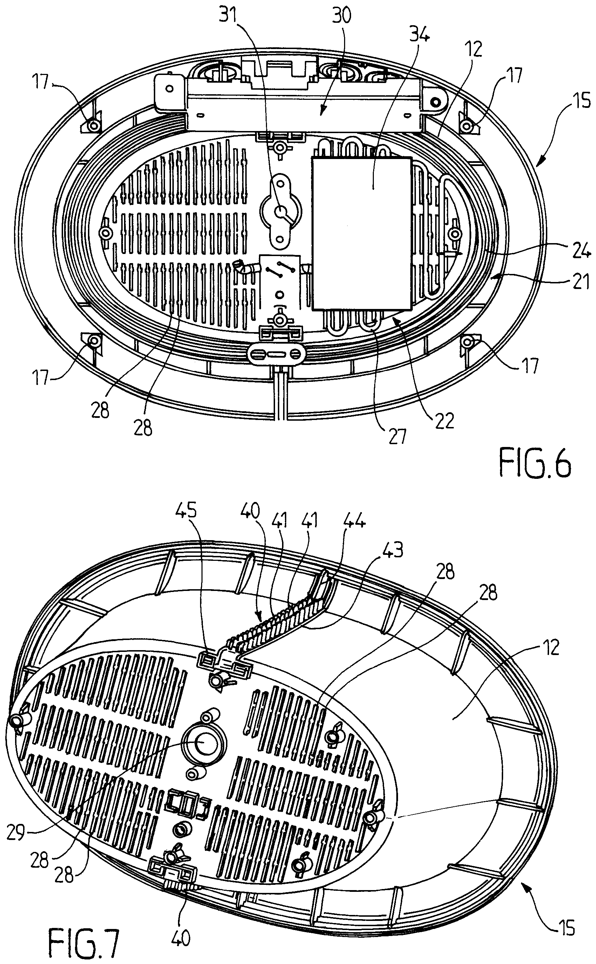

Les moyens de chauffe latéraux 21 sont portés par la paroi interne 12 et entourent la cavité 2. Dans l'exemple de réalisation illustré sur les figures, les moyens de chauffe latéraux 21 comprennent au moins un fil chauffant latéral 24 disposé dans la chambre intérieure 10 à l'extérieur de la paroi interne 12. Tel que mieux visible sur la figure 5, le fil chauffant latéral 24 est enroulé en spirale autour de la paroi interne 12. Les spirales du fil chauffant latéral 24 sont non jointives. De manière préférée, pour obtenir une bonne homogénéité de chauffe, le fil chauffant latéral 24 est enroulé en spirale sur plusieurs tours autour de la paroi interne 12, de préférence sur au moins 3 tours. Avantageusement alors, la paroi interne 12 présente au moins une série de conformations 41 définissant des logements 42 pour positionner le fil chauffant latéral 24. De préférence, les logements 42 sont espacés à intervalles réguliers. Dans l'exemple de réalisation illustré sur les figures, la paroi interne 12 présente deux séries de conformations 41 disposées de manière opposée. Chaque série de conformations 41 appartient à un élément de montage 40 rapporté à l'extérieur de la paroi interne 12. Les éléments de montage 40 s'étendent selon une direction principalement verticale, et de préférence verticale ou sensiblement verticale. Tel que mieux visible sur la figure 7, chaque élément de montage 40 est inséré dans une glissière 43 formée sur la face latérale externe de la paroi interne 12. Une extrémité de chaque élément de montage 40 est maintenue par une nervure 44 issue de la paroi interne 12, l'autre extrémité de chaque élément de montage 40 étant engagée dans une conformation concave 45 de la paroi interne 12.

Les moyens de chauffe latéraux 21 comprennent une membrane de diffusion de chaleur 25 disposée autour de la paroi interne 12. La membrane de diffusion de chaleur 25 est par exemple formée par une ou plusieurs feuilles d'aluminium autocollantes entourant la face latérale externe du corps intérieur 15. Si désiré la membrane de diffusion de chaleur 25 peut être réalisée en plusieurs parties, non nécessairement jointives. La figure 6 illustre une forme de réalisation de la membrane de diffusion de chaleur 25 comportant plusieurs feuilles d'aluminium autocollantes disposées selon une orientation principalement verticale, avec de préférence un recouvrement entre deux feuilles d'aluminium autocollantes adjacentes. La membrane de diffusion de chaleur 25 est interposée entre la paroi interne 12 et le fil chauffant latéral 24. La membrane de diffusion de chaleur 25 est agencée entre la paroi interne 12 et chaque élément de montage 40. A titre de variante, la membrane de diffusion de chaleur 25 peut s'étendre entre les éléments de montage 40 en s'interrompant au niveau d'au moins un des éléments de montage 40.

Les moyens de chauffe latéraux 21 sont ainsi formés par des moyens de chauffe latéraux surfaciques permettant une meilleure homogénéité de chauffe de la cavité 2, de la cuve 4 et du contenu de la cuve 4.

Les moyens de chauffe latéraux 21 comprennent une autre membrane de diffusion de chaleur 26, représentée uniquement sur la figure 4, disposée autour de la membrane de diffusion de chaleur 25. Le fil chauffant latéral 24 est disposé entre la membrane de diffusion de chaleur 25 et l'autre membrane de diffusion de chaleur 26. L'autre membrane de diffusion de chaleur 26 peut être aussi formée par une ou plusieurs feuilles d'aluminium autocollantes disposées sur le fil chauffant latéral 24 et la membrane de diffusion de chaleur 25, pour entourer la face latérale externe du corps intérieur 15. L'autre membrane de diffusion de chaleur 26 recouvre les conformations 41 du ou des éléments de montage 40. La membrane de diffusion de chaleur 25 et l'autre membrane de diffusion de chaleur 26 sont de préférence liées entre elles.

Dans l'exemple de réalisation illustré, le fil chauffant latéral 24 présente une puissance de l'ordre de 10 W par mètre, des valeurs supérieures ou inférieures peuvent toutefois être envisagées. Si désiré plusieurs fils chauffants latéraux 24 peuvent être disposés autour de la paroi interne 12.

Les moyens de chauffe inférieurs 22 sont distincts des moyens de chauffe latéraux 21. Les moyens de chauffe inférieurs 22 sont disposés sous le fond de la cavité 2. De préférence, les moyens de chauffe inférieurs 22 sont portés par la paroi interne 12. Dans l'exemple de réalisation illustré sur les figures, les moyens de chauffe inférieurs 22 comprennent au moins un fil chauffant inférieur 27 porté par la paroi interne 12. A cet effet, la paroi interne 12 présente des nervures inférieures 28 entre lesquelles est monté le fil chauffant inférieur 27. Les nervures inférieures 28 permettent de retenir le fil chauffant inférieur 27 et aussi de diffuser la chaleur du fil chauffant inférieur 27 au fond de la paroi interne 12. Plus particulièrement dans l'exemple illustré sur les figures, le fil chauffant inférieur 27 est monté en zigzag sous la paroi interne 12, tel que visible sur les figures 4 et 6. Les nervures inférieures 28 sont réparties de part et d'autre de la partie centrale du fond de la paroi interne 12. Pour mieux visualiser les nervures inférieures 28 sur les figures 4 et 6, le fil chauffant inférieur 27 est représenté seulement d'un côté de la partie centrale du fond de la paroi interne 12. Le fil chauffant inférieur 27 s'étend également de l'autre coté de la partie centrale du fond de la paroi interne 12 entre les nervures inférieures 28, même s'il n'est pas représenté sur les figures 4 et 6.

Dans l'exemple de réalisation illustré, le fil chauffant inférieur 27 présente une puissance de l'ordre de 10 W par mètre, des valeurs supérieures ou inférieures peuvent toutefois être envisagées. Si désiré plusieurs fils chauffants inférieurs 27 peuvent être disposés sous la paroi interne 12.

Si désiré, un même fil chauffant peut être utilisé pour réaliser le fil chauffant latéral 24 (ou l'un des fils chauffants latéraux 24) et le fil chauffant inférieur 27 (ou l'un des fils chauffants inférieurs 27).

La puissance du dispositif de chauffe 20 est de préférence inférieure ou égale à 300W.

Dans l'exemple de réalisation illustré sur les figures, la puissance du dispositif de chauffe 20 est de l'ordre de 40 W, la puissance des moyens de chauffe latéraux 21 étant de l'ordre de 12 W, la puissance des moyens de chauffe inférieurs 22 étant de l'ordre de 28 W.

Dans l'exemple de réalisation illustré sur les figures, le fond de la cuve 4 repose sur le fond de la cavité 2, tel que visible sur la figure 4. Cette disposition permet d'obtenir un meilleur transfert thermique des moyens de chauffe inférieurs 22 vers la cuve 4, plus rapide et plus homogène. Par ailleurs la distance entre la paroi latérale de la cuve 4 et la paroi latérale de la cavité 2 est de l'ordre de 1 mm dans la partie médiane de la cuve 4, et de préférence inférieure à 1 mm dans la partie inférieure de la cuve 4, pour assurer un bon transfert thermique entre les moyens de chauffe latéraux 21 et la cuve 4 par la paroi interne 12.

L'appareil pour la réalisation de préparations fermentées à base de lait comporte un dispositif de commande 30 comprenant un capteur de température 31 pour piloter le fonctionnement du dispositif de chauffe 20. Le capteur de température 31 est agencé en dessous du fond de la cuve 4 et à distance des moyens de chauffe inférieurs 22.

Le capteur de température 31 est par exemple un capteur de température de type CTN. Le capteur de température 31 est avantageusement porté par la paroi interne 12. Le capteur de température 31 peut être agencé au moins partiellement dans la chambre intérieure 10.

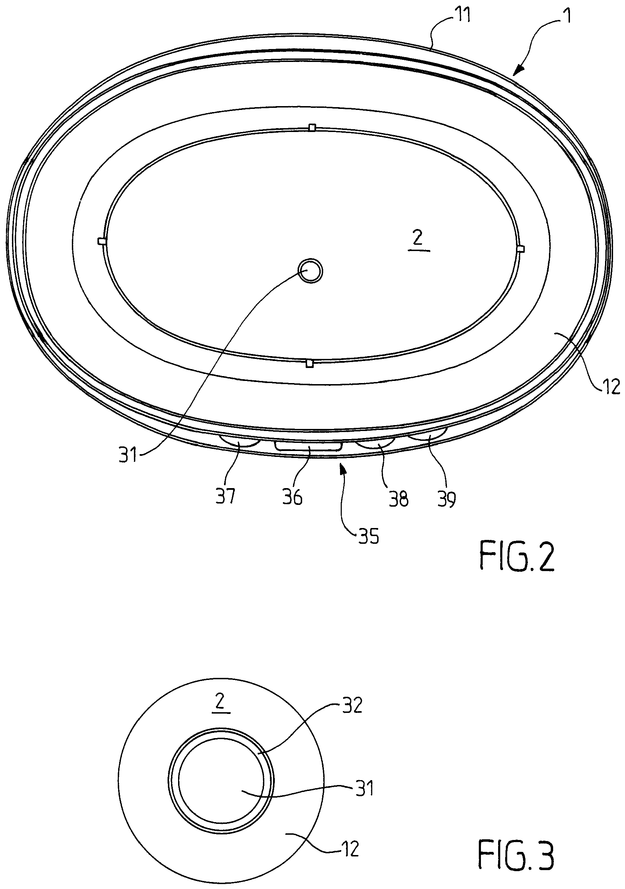

Dans l'exemple de réalisation illustré sur les figures, le capteur de température 31 est agencé en position centrale sous le fond de la paroi interne 12. Le capteur de température 31 est agencé entre les deux groupes de nervures inférieures 28. Le capteur de température 31 est ainsi agencé à distance du fil chauffant inférieur 27. Le capteur de température 31 débouche dans la cavité 2. Le capteur de température 31 traverse la paroi interne 12, tel que visible sur la figure 4. La paroi interne 12 présente à cet effet un passage 29 visible sur la figure 7, pour le capteur de température 31, non représenté. Tel que mieux visible sur la figure 3, un joint d'étanchéité 32 est monté entre le capteur de température 31 et la paroi interne 12. Le capteur de température 31 est en contact avec le fond de la cuve 4 disposée dans la cavité 2, tel que visible sur la figure 4. Le capteur de température 31 est alors de préférence monté mobile contre un élément de rappel élastique 33. La cuve 4 en place dans la cavité 2 repousse ainsi le capteur de température 31 contre l'élément de rappel élastique 33. Tel que représenté sur la figure 4, l'élément de rappel élastique 33 est par exemple un ressort hélicoïdal. A titre de variante, d'autres types d'éléments de rappel élastique peuvent être utilisés, notamment une languette flexible.

A titre de variante, le capteur de température 31 peut déboucher dans la cavité 2 sans nécessairement être en contact avec la cuve 4 et/ou être monté mobile contre un élément de rappel élastique 33. Le capteur de température 31 peut alors de préférence être monté affleurant avec le fond de la cavité 2 ou un peu en retrait par rapport au fond de la cavité 2.

A titre de variante, le capteur de température 31 peut aussi être entièrement agencé dans la chambre intérieure 10, sans déboucher dans la cavité 2. Le capteur de température 31 agencé en dessous du fond de la cuve 4 et à distance des moyens de chauffe inférieurs 22 mesure alors la température ambiante dans la chambre intérieure 10. La puissance peu élevée du dispositif de chauffe 20 permet d'envisager une régulation de température en fonction de mesures de la température ambiante dans la chambre intérieure 10 et/ou de température de parois de la chambre intérieure 10.

Le dispositif de commande 30 comporte un circuit de commande 34, visible sur la figure 4, pour commander l'alimentation du dispositif de chauffe 20. Le capteur de température 31 est relié au circuit de commande 34. Plus particulièrement dans l'exemple de réalisation illustré sur les figures, le circuit de commande 34 est porté par la paroi interne 12. Du fait de la faible puissance des moyens de chauffe inférieurs 22, le circuit de commande 34 peut être monté sous la paroi interne 12. Le circuit de commande 34 repose sur les nervures inférieures 28. Le circuit de commande 34 peut notamment comprendre un microprocesseur. Si désiré, le circuit de commande 34 peut porter le capteur de température 31, notamment lorsque le capteur de température 31 est entièrement agencé dans la chambre intérieure 10, sans déboucher dans la cavité 2. Le capteur de température 31 est alors avantageusement placé sous le circuit de commande 34, pour limiter l'exposition du capteur de température 31 au rayonnement des moyens de chauffe inférieurs 22.

Dans l'exemple de réalisation illustré sur les figures, le dispositif de commande 30 comporte un panneau de commande 35 pour sélectionner un mode de chauffe parmi au moins deux modes de chauffe. Plus particulièrement dans l'exemple de réalisation illustré sur les figures, le panneau de commande 35 est porté par le corps extérieur tubulaire 13. Le panneau de commande 35 comprend un afficheur 36, par exemple un afficheur LCD, un premier bouton de commande 37 pour sélectionner un mode de chauffe, un deuxième bouton de commande 38 pour diminuer le temps de chauffe, et un troisième bouton de commande 39 pour augmenter le temps de chauffe.

Un premier mode de chauffe est par exemple prévu pour réaliser des préparations fermentées à base de lait telles que notamment des yaourts, des yaourts à boire, de l'Ayran ou du Laban. Le capteur de température 31 associé au circuit de commande 34 et au dispositif de chauffe 20 permet d'obtenir une température de l'ordre de 43°C dans la préparation contenue dans la cuve 4 fermée par le couvercle intérieur 5 et placée dans la cavité 2 fermée par le couvercle principal 6. Le temps de chauffe préprogrammé est de 6 heures.

Un deuxième mode de chauffe est par exemple prévu pour réaliser des préparations fermentées à base de lait telles que notamment du Kéfir ou du Leben. Le capteur de température 31 associé au circuit de commande 34 et au dispositif de chauffe 20 permet d'obtenir une température comprise entre 25°C et 30°C dans la préparation contenue dans la cuve 4 fermée par le couvercle intérieur 5 et placée dans la cavité 2 fermée par le couvercle principal 6. Le temps de chauffe préprogrammé est de 12 heures.

Le premier et/ou le deuxième mode de chauffe peut notamment utiliser une régulation classique par seuil de température haut et seuil de température bas consistant à alimenter le dispositif de chauffe 20 jusqu'à la détection du seuil de température haut, à interrompre alors l'alimentation du dispositif de chauffe 20 jusqu'à la détection du seuil de température bas, pour alimenter à nouveau le dispositif de chauffe 20 jusqu'à la détection du seuil de température haut, et ainsi de suite jusqu'à atteindre le temps de chauffe préprogrammé.

Si désiré l'un au moins des modes de chauffe peut mettre en oeuvre une première phase de chauffe à puissance fixe obtenue par alternance de périodes de chauffe et de périodes d'arrêt, avant une deuxième phase de chauffe à puissance variable obtenue en utilisant le capteur de température 31 pour réguler l'alimentation du dispositif de chauffe 20.

Si désiré l'un au moins des modes de chauffe peut mettre en oeuvre une détection de la température ambiante lors de la mise en fonctionnement de l'appareil, par exemple pour ajuster la puissance de chauffe au début de la chauffe en utilisant une succession de périodes de chauffe et de périodes d'arrêt.

L'appareil selon l'invention s'utilise et fonctionne de la manière suivante.

L'utilisateur place la cuve 4 dans la cavité 2 et verse la quantité souhaitée de lait, par exemple 1,5 litre, dans la cuve 4, ajoute le ferment approprié, et remue la préparation pour bien mélanger le lait et le ferment. L'utilisateur ferme ensuite la cuve 4 avec le couvercle intérieur 5, puis le boîtier principal 1 avec le couvercle principal 6. L'utilisateur sélectionne le mode de chauffe souhaité avec le premier bouton de commande 37, puis ajuste si désiré le temps de chauffe avec le deuxième bouton de commande 38 et/ou le troisième bouton de commande 39. Les séries de conformations 41 favorisent un enroulement régulier du fil chauffant latéral 24 autour de la paroi interne 12 et facilitent l'obtention de préparations de qualité similaire d'un appareil à l'autre.

A titre de variante, la cuve 4 peut être insérée complètement dans la cavité 2.

A titre de variante, l'enveloppe externe 11 et la paroi interne 12 du boîtier principal 1 ne sont pas nécessairement définies par le corps extérieur tubulaire 13, la base 14, et le corps intérieur 15. Notamment le corps intérieur 15 peut être prolongé vers l'extérieur pour former une partie plus importante de l'enveloppe externe 11.

A titre de variante, l'appareil peut comporter un élément de montage 40, ou au contraire plus de deux éléments de montage 40, de préférence entre 3 et 6 éléments de montage 40.

A titre de variante, les conformations 41 n'appartiennent pas nécessairement à un élément de montage 40 rapporté à l'extérieur de la paroi interne 12, mais peuvent notamment être formées sur la face extérieure de la paroi interne 12.

A titre de variante, le dispositif de chauffe 20 ne comporte pas nécessairement des moyens de chauffe inférieurs 22.

A titre de variante, l'appareil ne comporte pas nécessairement un dispositif de commande 30 comprenant un capteur de température 31 pour piloter le fonctionnement du dispositif de chauffe 20.

La présente invention n'est nullement limitée à l'exemple de réalisation décrit et à ses variantes, mais englobe de nombreuses modifications dans le cadre des revendications.

## Revendications

1. Appareil pour la réalisation de préparations fermentées à base de lait, notamment de préparations fermentées liquides, comportant un boîtier principal (1) définissant une cavité (2) présentant une ouverture supérieure (3), une cuve (4) amovible insérée au moins partiellement dans la cavité (2), un couvercle intérieur (5) associé à la cuve (4), un couvercle principal (6) associé au boîtier principal (1), le boîtier principal (1) présentant une enveloppe externe (11) et une paroi interne (12) définissant une chambre intérieure (10) logeant un dispositif de chauffe (20) comprenant des moyens de chauffe latéraux (21), les moyens de chauffe latéraux (21) comprenant au moins un fil chauffant latéral (24) enroulé en spirale sur plusieurs tours autour de la paroi interne (12), **caractérisé en ce que** la paroi interne (12) présente au moins une série de conformations (41) définissant des logements (42) pour positionner le fil chauffant latéral (24).

2. Appareil pour la réalisation de préparations fermentées à base de lait selon la revendication 1, **caractérisé en ce que** la paroi interne (12) présente deux séries de conformations (41) disposées de manière opposée.

3. Appareil pour la réalisation de préparations fermentées à base de lait selon l'une des revendications 1 ou 2, **caractérisé en ce que** la ou chaque série de conformations (41) appartient à un élément de montage (40) rapporté à l'extérieur de la paroi interne (12).

4. Appareil pour la réalisation de préparations fermentées à base de lait selon l'une des revendications 1 à 3, **caractérisé en ce que** les moyens de chauffe latéraux (21) comprennent une membrane de diffusion de chaleur (25) agencée entre la paroi interne (12) et le fil chauffant latéral (24).

5. Appareil pour la réalisation de préparations fermentées à base de lait selon la revendication 3 et la revendication 4, **caractérisé en ce que** la membrane de diffusion de chaleur (25) est agencée entre la paroi interne (12) et le ou chaque élément de montage (40).

6. Appareil pour la réalisation de préparations fermentées à base de lait selon l'une des revendications 4 ou 5, **caractérisé en ce que** les moyens de chauffe latéraux (21) comprennent une autre membrane de diffusion de chaleur (26) disposée autour de la membrane de diffusion de chaleur (25), le fil chauffant latéral (24) étant disposé entre la membrane de diffusion de chaleur (25) et l'autre membrane de diffusion de chaleur (26).

7. Appareil pour la réalisation de préparations fermentées à base de lait selon la revendication 6, **caractérisé en ce que** l'autre membrane de diffusion de chaleur (26) recouvre les conformations (41) du ou des éléments de montage (40).

8. Appareil pour la réalisation de préparations fermentées à base de lait selon l'une des revendications 1 à 7, **caractérisé en ce que** la cuve (4) présente une partie supérieure évasée (7) et **en ce que** le couvercle intérieur (5) est engagé à l'intérieur de la partie supérieure évasée (7).

9. Appareil pour la réalisation de préparations fermentées à base de lait selon l'une des revendications 1 à 8, **caractérisé en ce que** le dispositif de commande (30) comporte un panneau de commande (35) pour sélectionner un mode de chauffe parmi au moins deux modes de chauffe.

10. Appareil pour la réalisation de préparations fermentées à base de lait selon l'une des revendications 1 à 9, **caractérisé en ce que** le boîtier principal (1) comporte un corps extérieur tubulaire (13) reposant sur une base (14) et portant un corps intérieur (15) définissant la paroi interne (12).

11. Appareil pour la réalisation de préparations fermentées à base de lait selon la revendication 9 et la revendication 10, **caractérisé en ce que** le panneau de commande (35) est porté par le corps extérieur tubulaire (13).

12. Appareil pour la réalisation de préparations fermentées à base de lait selon l'une des revendications 1 à 11, **caractérisé en ce que** le dispositif de commande (30) comporte un circuit de commande (34) porté par la paroi interne (12).

## Patentansprüche

1. Vorrichtung zur Herstellung von fermentierten Zubereitungen auf Basis von Milch, insbesondere flüssigen, fermentierten Zubereitungen, die ein Hauptgehäuse (1), das einen Hohlraum (2) definiert, der eine obere Öffnung (3) aufweist , einen Behälter (4), der zumindest teilweise in den Hohlraum (2) entnehmbar eingefügt ist, einen inneren Deckel (5), der mit dem Behälter (4) verbunden ist, eine Hauptabdeckung (6) umfasst, die mit dem Hauptgehäuse (1) verbunden ist, wobei das Hauptgehäuse (1) eine äußere Hülle (11) und eine innere Wand (12) aufweist, die eine innere Kammer (10) definiert, in der eine Heizeinrichtung (20) untergebracht ist, die seitliche Heizmittel (21) umfasst, wobei die seitlichen Heizmitteln (21) mindestens einen seitlichen Heizdraht (24) umfassen, der spiralförmig in mehreren Umdrehungen um die innere Wand (12) gewickelt ist, **dadurch gekennzeichnet, dass** die innere Wand (12) mindestens eine Reihe von Gestaltungen (41) aufweist, die Sitze (42) zum Positionieren des seitlichen Heizdrahtes (24) definieren.

2. Vorrichtung zur Herstellung von fermentierten Zubereitungen auf Basis von Milch nach Anspruch 1, **dadurch gekennzeichnet, dass** die innere Wand (12) zwei Reihen von Gestaltungen (41) aufweist, die gegenüberliegend angeordnet sind.

3. Vorrichtung zur Herstellung von fermentierten Zubereitungen auf Basis von Milch nach einem der Ansprüche 1 oder 2, **dadurch gekennzeichnet, dass** die oder jede Reihe von Gestaltungen (41) zu einem Befestigungselement (40) gehört, das außerhalb der inneren Wand (12) angebracht ist.

4. Vorrichtung zur Herstellung von fermentierten Zubereitungen auf Basis von Milch nach einem der Ansprüche 1 bis 3, **dadurch gekennzeichnet, dass** die seitlichen Heizmittel (21) ein Membran zur Wärmediffusion (25) umfassen, das zwischen der inneren Wand (12) und dem seitlichen Heizdraht (24) angeordnet ist.

5. Vorrichtung zur Herstellung von fermentierten Zubereitungen auf Basis von Milch nach Anspruch 3 und Anspruch 4, **dadurch gekennzeichnet, dass** das Membran zur Wärmediffusion (25) zwischen der inneren Wand (12) und dem oder jeden Befestigungselement (40) angeordnet ist.

6. Vorrichtung zur Herstellung von fermentierten Zubereitungen auf Basis von Milch nach einem der Ansprüche 4 oder 5, **dadurch gekennzeichnet, dass** die seitlichen Heizmittel (21) eine weitere Membran zur Wärmediffusion (26) umfassen, die um die Membran zur Wärmediffusion (25) angeordnet ist, wobei der seitliche Heizdraht (24) zwischen der Membran zur Wärmediffusion (25) und der weiteren Membran zur Wärmediffusion (26) angeordnet ist.

7. Vorrichtung zur Herstellung von fermentierten Zubereitungen auf Basis von Milch nach Anspruch 6, **dadurch gekennzeichnet, dass** die weitere Membran zur Wärmediffusion (26) die Gestaltungen (41) des oder der Befestigungselemente (40) bedecken.

8. Vorrichtung zur Herstellung von fermentierten Zubereitungen auf Basis von Milch nach einem der Ansprüche 1 bis 7, **dadurch gekennzeichnet, dass** der Behälter (4) ein konisch aufgeweitetes Oberteil (7) aufweist, und dass der innere Deckel (5) in das Innere des aufgeweiteten Oberteils (7) eingreift.

9. Vorrichtung zur Herstellung von fermentierten Zubereitungen auf Basis von Milch nach einem der Ansprüche 1 bis 8, **dadurch gekennzeichnet, dass** die Steuereinrichtung (30) eine Steuertafel (35) umfasst, um einen Heizmodus unter mindestens zwei Heizmodi auszuwählen.

10. Vorrichtung zur Herstellung von fermentierten Zubereitungen auf Basis von Milch nach einem der Ansprüche 1 bis 9, **dadurch gekennzeichnet, dass** das Hauptgehäuse (1) einen äußeren rohrförmigen Körper (13) umfasst, der auf einem Fundament (14) ruht und einen inneren Körper (15) trägt, der die innere Wand (12) definiert.

11. Vorrichtung zur Herstellung von fermentierten Zubereitungen auf Basis von Milch nach Anspruch 9 und Anspruch 10, **dadurch gekennzeichnet, dass** die Steuertafel (35) durch den äußeren röhrenförmigen Körper (13) getragen wird.

12. Vorrichtung zur Herstellung von fermentierten Zubereitungen auf Basis von Milch nach einem der Ansprüche 1 bis 11, **dadurch gekennzeichnet, dass** die Steuereinrichtung (30) eine Steuerschaltung (34) umfasst, die von der inneren Wand (12) getragen wird.

## Claims

1. Appliance for producing milk-based fermented preparations, in particular liquid fermented preparations, comprising a main housing (1) defining a cavity (2) having a top opening (3), a removable vessel (4) at least partially inserted in the cavity (2), an internal lid (5) associated with the vessel (4), a main lid (6) associated with the main housing (1), the main housing (1) having an external casing (11) and an internal wall (12) defining an internal chamber (10) housing a heating device (20) comprising lateral heating means (21), the lateral heating means (21) comprising at least one lateral heating wire (24) wound in a spiral over a plurality of turns around the internal wall (12), **characterised in that** the internal wall (12) has at least one series of conformations (41) defining recesses (42) for positioning the lateral heating wire (24).

2. Appliance for producing milk-based fermented preparations according to claim 1, **characterised in that** the internal wall (12) has two series of conformations (41) disposed opposite each other.

3. Appliance for producing milk-based fermented preparations according to either claim 1 or claim 2, **characterised in that** the or each series of conformations (41) belongs to a mounting element (40) attached to the outside of the internal wall (12).

4. Appliance for producing milk-based fermented preparations according to any of claims 1 to 3, **characterised in that** the lateral heating means (21) comprise a heat-diffusion membrane (25) arranged between the internal wall (12) and the lateral heating wire (24).

5. Appliance for producing milk-based fermented preparations according to claim 3 and claim 4, **characterised in that** the heat-diffusion membrane (25) is arranged between the internal wall (12) and the or each mounting element (40).

6. Appliance for producing milk-based fermented preparations according to either claim 4 or claim 5, **characterised in that** the lateral heating means (21) comprise another heat-diffusion membrane (26) disposed around the heat-diffusion membrane (25), the lateral heating wire (24) being disposed between the heat-diffusion membrane (25) and the other heat-diffusion membrane (26).

7. Appliance for producing milk-based fermented preparations according to claim 6, **characterised in that** the other heat-diffusion membrane (26) covers the conformations (41) of the mounting element or elements (40).

8. Appliance for producing milk-based fermented preparations according to any of claims 1 to 7, **characterised in that** the vessel (4) has a splayed upper part (7) and **in that** the internal lid (5) is engaged inside the splayed upper part (7).

9. Appliance for producing milk-based fermented preparations according to any of claims 1 to 8, **characterised in that** the control device (30) comprises a control panel (35) for selecting a heating mode from at least two heating modes.

10. Appliance for producing milk-based fermented preparations according to any of claims 1 to 9, **characterised in that** the main housing (1) comprises a tubular external body (13) resting on a base (14) and carrying an internal body (15) defining the internal wall (12).

11. Appliance for producing milk-based fermented preparations according to claim 9 and claim 10, **characterised in that** the control panel (35) is carried by the tubular external body (13).

12. Appliance for producing milk-based fermented preparations according to any of claims 1 to 11, **characterised in that** the control device (30) comprises a control circuit (34) carried by the internal wall (12).
